# EUROPÄISCHE PATENTSCHRIFT

(11) **EP 2 685 141 B1**
(45) Veröffentlichungstag und Bekanntmachung des Hinweises auf die Patenterteilung: **30.03.2016**
(21) Anmeldenummer: 13172093.0
(22) Anmeldetag: 14.06.2013
(51) Int. Cl.: F16K 3/02, F16K 3/30

(54) **Plattenschieber, vorzugsweise für Biogaserzeugungsanlagen**
Gate valve, preferably for biogas generating installations
Robinet-vanne, de préférence pour installations de production de biogaz

(30) Priorität: 12.07.2012 CH 10732012
(43) Veröffentlichungstag der Anmeldung: 15.01.2014
(73) Patentinhaber: Sistag AG Absperrtechnik, 6274 Eschenbach (CH)
(72) Erfinder: Sidler, Hans-Jörg, 6274 Eschenbach (CH); Aschwanden, Ambros, 6214 Schenkon (CH); Baumli, Fredy, 6026 Rain (CH)
(74) Vertreter: Luchs, Willi

(56) Entgegenhaltungen:
- EP-A1- 0 114 278
- GB-A- 682 057
- NL-C- 94 654
- US-A- 2 000 853
- US-A- 2 550 984
- US-A- 3 170 670

## Beschreibung

Die Erfindung betrifft einen Plattenschieber, vorzugsweise für Biogaserzeugungsanlagen, die Medien mit Festbestandteilen führende Leitungen nach dem Oberbegriff des Anspruchs 1 aufweisen.

Plattenschieber dieser Art beispielsweise gemäss EP-A-2 216 572 bestehen bekanntlich aus einem Schiebergehäuse mit einer Durchgangsöffnung für das Medium sowie einer darin zwischen einer Offen- und einer Schliessstellung verschiebbaren Schieberplatte, die den Mediendurchfluss in der Schliessstellung unterbricht.

Um sicherzustellen, dass die Schieberplatte die Durchgangsöffnung voll absperrt, ist das Schiebergehäuse in der Regel im unteren Bereich mit einer Aufnahmenut versehen, in welche die Schieberplatte in der Schliessstellung eindringt, um dort eine Scherwirkung auf allfällig durchfliessende Festbestandteile im Medium auszuüben. Bei langfaserigen Medien, wie zum Beispiel Stroh, ist diese Scherwirkung allerdings sehr begrenzt. Die länglichen Festbestandteile des Mediums werden dort mehr eingedrückt als geschnitten, und verhindern damit häufig die störungsfreie Funktion des Absperrschiebers.

In der Druckschrift US-A-3,170,670 ist ein Plattenschieber mit einem Gehäuse und einer quer zu diesem die Öffnung verschliessbaren Platte vorgesehen, welche im unteren horizontalen Bereich eine abgeschrägte Schneidkante aufweist. Die Platte ist dabei bei der einen Stirnseite durch einen Schiebersitz gehalten, welcher ringförmig ausgebildet ist. Dieser Ring ist aber eindeutig nicht als Messerelement ausgebildet, sondern übt bloss eine Dichtungsfunktion um die Platte herum aus. Er bewirkt daher nicht nur einen Druck auf der unteren Seite auf die Platte, sondern er muss rundherum dicht an die Platte angepresst werden, damit der Schieber im geschlossenen Zustand kein Leck aufweist.

Der Erfindung liegt die Aufgabe zugrunde, diese Nachteile zu vermeiden und einen Plattenschieber der eingangs genannten Art zu schaffen, der auch bei Anlagen, die langfaserige Festbestandteile oder ähnliches in den durchfliessenden Medien verarbeiten, eine einwandfreie Absperrung der das Medium führenden Leitung sicherstellt.

Diese Aufgabe ist erfindungsgemäss dadurch gelöst, dass dem Schiebergehäuse im unteren Randbereich der Durchgangsöffnung mindestens ein Messerelement zugeordnet ist, dessen Schneidkante beim Verschieben der Schieberplatte in die Schliessstellung scherenartig mit einer den stirnseitigen Plattenrand bildenden Schneidkante der Schieberplatte zusammenwirkt.

Auf diese Weise ist sichergestellt, dass beim Absperren der Leitung auch längliche Festbestandteile oder ähnliches im Medium einwandfrei geschnitten werden und dadurch die Schieberplatte die Leitung dicht absperrt, ohne ihre freie Beweglichkeit zu beinträchtigen.

Gemäß der Erfindung ist das Messerelement durch ein im Schiebergehäuse zwischen zwei Gehäusehälften eingebautes Messersegment gebildet. Dadurch kann das Messerelement z.B. bei einer Beschädigung der Schneidkante ausgetauscht werden. Das Messersegment kann auch leicht etwa zum Nachschleifen der Schneidkante de- bzw. wieder montiert werden.

Es ist zwecks einer einwandfreien Schneidwirkung des Messers vorteilhaft, wenn das Messerelement ausserhalb seiner Schneidkante auf der von der Schieberplatte abgekehrten Seite von einem im Schiebergehäuse eingelegten Federelement umgeben ist, durch welches beim Absperrvorgang das Messerelement gegen die Schieberplatte quer zur Verschieberichtung andrückbar ist.

Bei Plattenschiebern, deren Schieberplatte mit einem annähernd geradlinigen stirnseitigen Plattenrand versehen ist, sieht die Erfindung vor, dass das Messerelement eine leicht abgerundete Schneidkante aufweist, die mit einer Schneidkante der Schieberplatte zusammenwirkt. Die gewählte Geometrie der Schneidkanten erzeugt beim Absperrvorgang eine guillotinenartige Schneidwirkung.

Um zu verhindern, dass beide Schneidkanten beim Herunterfahren der Schieberplatte bei den Ecken des Messerelements gegeneinander stossen können, ist dieses dort auf der gegen die Schieberplatte drückende Seite mit Anschrägungen versehen, durch welche die Schneidkante des Messerelements schräg von der Schneidkante der Schieberplatte abgesetzt ist.

Ausserdem sieht die Erfindung vor, dass die Schneidkante des Messelements mit einem kleineren Radius als der Radius der Schneidkante der Schieberplatte versehen ist.

Der Schieber kann auch mit Spülbohrungen zum Spülen des zwischen Messerelement und Schiebergehäuse gebildeten Eckraumes versehen sein. Auf diese Weise ist es möglich, diesen Eckraum periodisch freizuspülen, damit die Schieberplatte dauerhaft störungsfrei schliessen kann.

Es ist auch für die optimale Absperrfunktion des Plattenschiebers zweckmässig, wenn das Schiebergehäuse eine Längsdichtung aufweist, gegen welche die Schieberplatte in der Schliessstellung angedrückt ist.

Die Erfindung sowie weitere Vorteile derselben sind nachfolgend anhand von Ausführungsbeispielen unter Bezugnahme auf die Zeichnung näher erläutert. Es zeigen:
- Fig. 1: einen Plattenschieber gemäss der Erfindung, im Schnitt und perspektivisch dargestellt;
- Fig. 2: eine Vorderansicht des Plattenschiebers gemäss Fig. 1;
- Fig. 3: eine perspektivische Ansicht des Plattenschiebers nach Fig. 1 mit separaten Gehäusehälften;
- Fig. 4: eine Explosionsansicht des Plattenschiebers nach Fig. 1; und
- Fig. 5: einen teilweisen Querschnitt einer Variante eines Plattenschiebers mit dem erfindungsgemässen Messerelement.

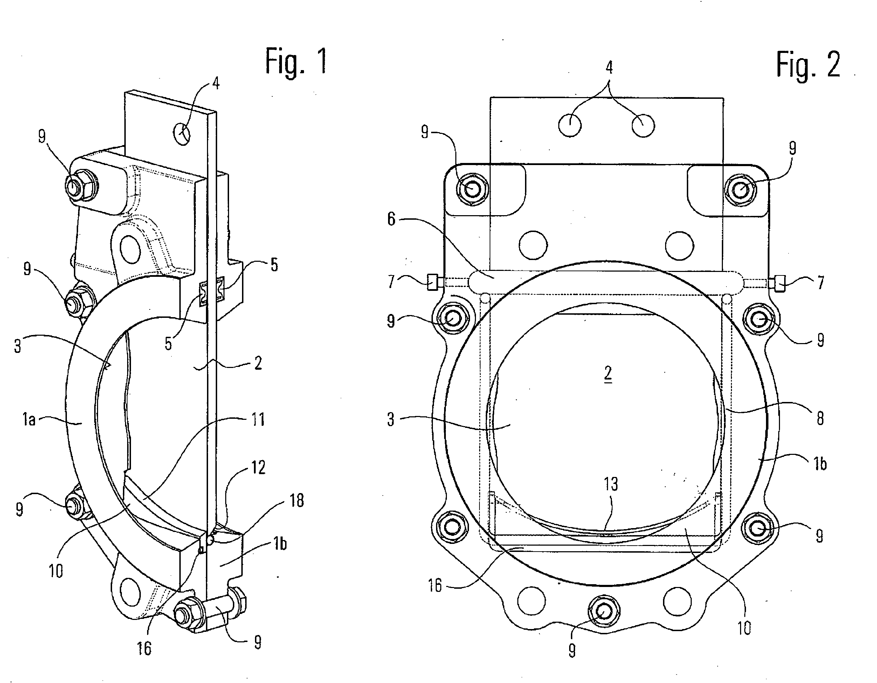

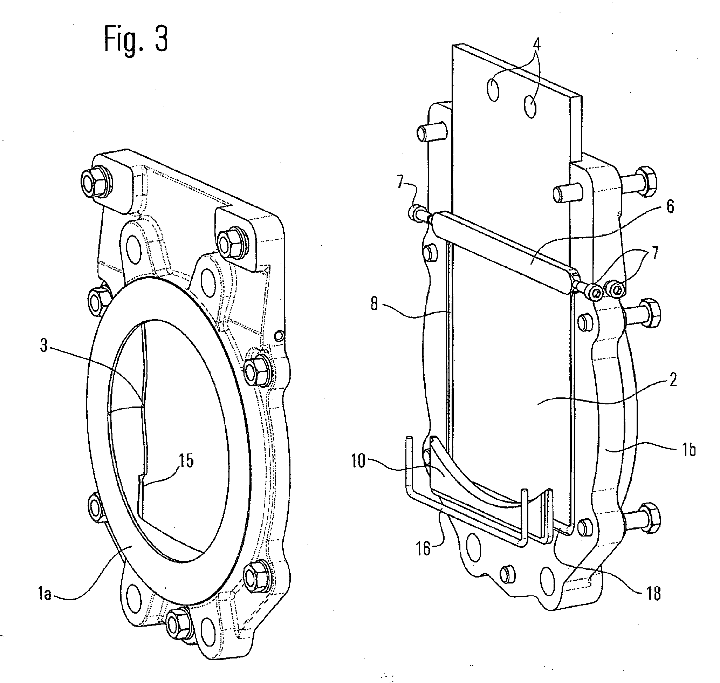

Der in den Fig. 1 bis Fig. 4 dargestellte Plattenschieber eignet sich für den Einsatz in Biogaserzeugungsanlagen, die Medien mit Festbestandteilen wie Stroh und ähnlich langfaserigen Materialien verarbeiten. Genausogut kann dieser aber im Lebensmittelbereich, in der Papier- bzw. Chemieindustrie oder in anderen Bereichen verwendet werden, bei denen die Medien feste Materialien enthalten.

Der erfindungsgemässe Plattenschieber besteht aus einem zweiteiligen Schiebergehäuse 1a, 1b und einer darin verschiebbaren Schieberplatte 2, wobei das Schiebergehäuse 1 mit einer Durchgangsöffnung 3 für das zu verarbeitende Medium versehen ist, während die annähernd rechteckige Schieberplatte 2 massiv ist. Letztere ist mit einem nicht dargestellten Antriebsorgan betätigbar, das im oberen Teil der Schieberplatte 2 eingreift und diese von einer Offenstellung, in der sie die Durchgangsöffnung 3 freigibt, in eine Schliessstellung, in der sie die Durchgangsöffnung 3 absperrt, verschieben kann. Der Plattenschieber ist in Fig. 1 bis Fig. 4 in der Schliessstellung dargestellt.

Zur Abdichtung des Gehäuseinnenraums dienen Dichtungen 5, 6, die in den Gehäusehälften 1 a, 1 b beidseitig der Schieberplatte 2 eingebaut und Schrauben 7 zum Nachdichten vorgesehen sind. Die Schieberplatte 2 wird zusätzlich seitlich und stirnseitig mit einer Dichtschnur 8 abgedichtet, die zwischen beiden Gehäusehälften 1 a, 1 b eingelegt ist. Diese sind im zusammengebauten Zustand mittels Schrauben 9 gegeneinander festgeschraubt.

Der erfindungsgemässe Plattenschieber ist im unteren Bereich der Durchgangsöffnung 3 mit einem Messerelement 10 ausgestattet, dessen Schneidkante 11 beim Verschieben der Schieberplatte 2 in die Schliessstellung scherenartig mit einer den stirnseitigen Plattenrand bildenden Schneidkante 12 der Schieberplatte 2 zusammenwirkt.

Das Messerelement 10 ist als Messersegment ausgebildet, dessen Schneidkante 11 vorzugsweise mit einem kleineren Radius als der Radius der Schneidkante 12 der Schieberplatte 2 versehen ist, wodurch sichergestellt ist, dass die Schieberplatte beim Schliessen zuerst mit ihren Ecken mit dem Messerelement in Kontakt kommt. Damit wird zudem erreicht, dass beim Absperren der Leitung die Scherwirkung der beiden Schneidkanten sich beidseitig guillotinenartig von aussen nach innen fortpflanzt, was gegenüber Plattenschiebern mit zwei gleichzeitig voll aufeinandertreffenden Schneidkanten vorteilhaft ist.

Die Schneidkanten können aber auch ohne weiteres mit einer anderen Geometrie hergestellt sein.

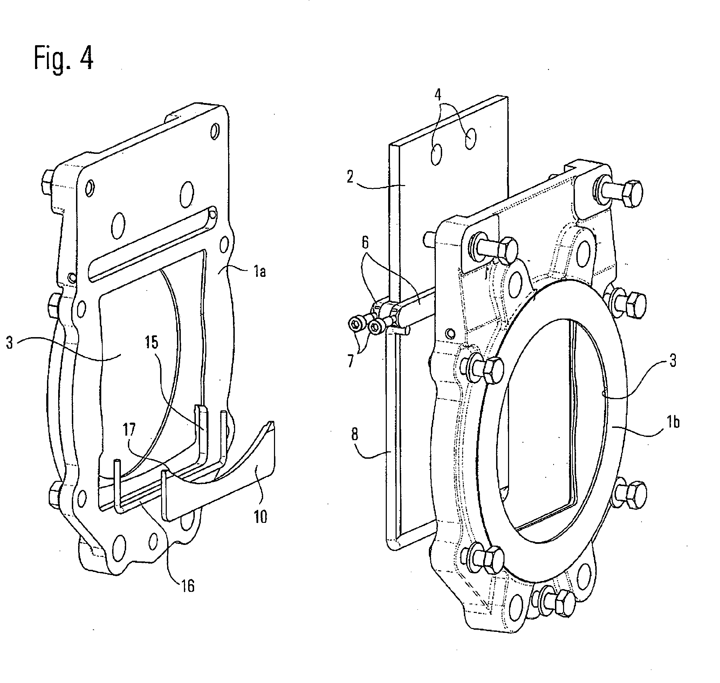

Wie aus Fig. 4 ersichtlich, ist das Messerelement 10 in einer Ausnehmung 15 der Gehäusehälfte 1a eingebaut. Dort ist auch ein schnurähnliches Federelement 16 eingelegt, an welches das Messerelement 10 andrückbar ist und dazu dient, dass das Messerelement 10 quer zur Platten-Verschieberichtung federnd angeordnet ist.

Das Messerelement 10 ist ausserdem an beiden äusseren Enden mit Anschrägungen 17 versehen, die verhindern, dass die Schneidkante 12 der Schieberplatte 2 dort auf die Schneidkante 11 des Messerelements 10 aufstösst, und die gleichzeitig bewirken, dass die Schieberplatte gleitend in den Wirkungsbereich des Messerelements eindringen kann. Zusätzlich kann sich das Messerelement durch dieses Federelement 16 quer zur Platten-Verschieberichtung in geringem Mass verstellen. Damit ist zum einen eine Anpresskraft dieses Messerelements an die Schieberplatte im Kontaktzustand und zum andern ein sicheres Schliessen der Schieberplatte gewährleistet.

Um die Eckbereiche hinter dem Messerelement sauber zu halten, kann der Schieber dort zusätzlich Spülbohrungen aufweisen, durch welche eine Spülung dieser Bereiche bei offenem Schieber möglich ist.

Wie aus Fig. 1 bis Fig. 3 ersichtlich, weist die Dichtschnur 8 einen Frontabschnitt 18 auf, gegen den die Schneidkante 12 der Schieberplatte 2 in der Schliessstellung des Schiebers angedrückt wird. Durch die Dichtschnur 18 ist die Durchgangsöffnung 3 nach aussen hin im unteren Bereich des Schiebergehäuses abdichtet.

Das Messerelement 10 ist als ein separates Bauteil ausgebildet, das zur Optimierung der Schneidwirkung vorzugsweise aus gehärtetem Stahl hergestellt ist. Das Messerelement 10 kann leicht nach Auseinanderbauen der beiden Gehäusehälften 1 a, 1 b entfernt werden, etwa um seine Schneidkante nachzuschleifen oder sonstige Instandhaltungsarbeiten vorzunehmen. Es ist auch dadurch möglich, von Fall zu Fall unterschiedliche Messerelemente zu verwenden, die an die jeweilige Geometrie der Schieberplatte oder an die Beschaffenheit des abzusperrenden Mediums angepasst sind.

Die separate Ausbildung des Messerelements 10 hat ausserdem den Vorteil, dass dieses leicht in bestehende Absperrschieber einbaubar ist, insbesondere dann wenn, wie beim beschriebenen Schieber, das Schiebergehäuse sich aus zwei miteinander befestigten Gehäusehälften zusammensetzt. Dafür ist es lediglich erforderlich, nachträglich in die eine Gehäusehälfte die Nut 15 zur Aufnahme des Messerelements 10 und dem Federelement 16 vorzusehen.

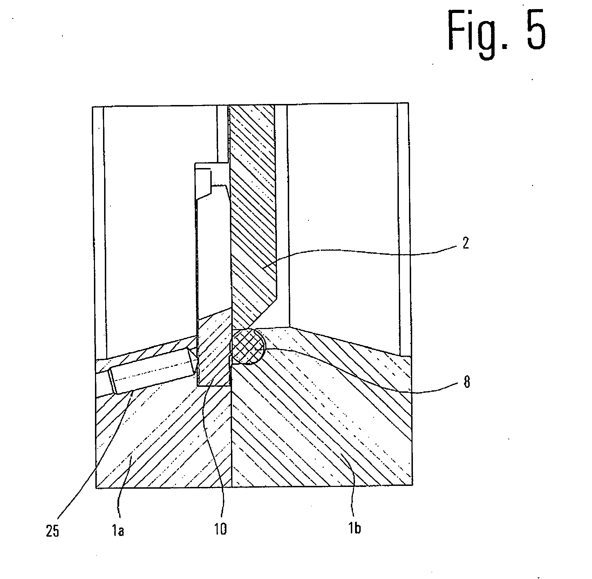

Gemäss Fig. 5 ist ein Ausführungsbeispiel eines Plattenschiebers dargestellt, bei dem andeutungsweise das zweiteilige Schiebergehäuse 1a, 1b, die Schieberplatte 2 und zudem das Messerelement 10 und die daran angrenzende Dichtschnur mit dem Frontabschnitt 18 im Schnitt ersichtlich sind. Als eigentlicher Unterschied bei diesem Plattenschieber ist mindestens ein Justiermittel 25 vorgesehen, das in der einen Gehäusehälfte 1a quer zur Schieberausdehnung derart verstellbar angeordnet ist, dass es gegen das Messerelement 10 andrückbar ist und damit vorzugsweise nach der Montage des Schiebers eine optimale Einstellung desselben in Bezug zur Schieberplatte 2 ermöglicht. Als Justiermittel 25 kann eine Stiftschraube oder dergleichen verwendet werden, welche vorteilhaft mittig beim Schieber platziert ist.

Ferner ist zumindest der horizontale Teil des Federelementes 16, welcher in Fig. 4 dargestellt ist, weggelassen und nur die beiden seitlichen Stücke in Verschieberichtung der Schieberplatte vorgesehen.

Das Messerelement könnte theoretisch auch mehrteilig ausgebildet sein. Auch die Schieberplatte könnte eine an ihrer Unterseite befestigte Messerleiste oder dergleichen aufweisen.

## Patentansprüche

1. Plattenschieber, vorzugsweise für Biogaserzeugungsanlagen, mit einem eine Durchgangsöffnung (3) aufweisenden Schiebergehäuse (1 a, 1 b) und einer darin zwischen einer Offen- und einer Schliessstellung verschiebbaren Schieberplatte (2) mit einer den stirnseitigen Plattenrand bildenden Schneidkante (12), **dadurch gekennzeichnet, dass**
dem Schiebergehäuse (1a, 1b) im unteren Randbereich der Durchgangsöffnung (3) zwischen zwei Gehäusehälften (1a, 1b) mindestens ein als separates Messersegment ausgebildetes Messerelement (10) mit einer Schneidkante (11) zugeordnet ist, wobei diese Schneidkante (11) beim Verschieben der Schieberplatte (2) in die Schliessstellung scherenartig mit der Schneidkante (12) der Schieberplatte (2) zusammenwirkt.

2. Plattenschieber nach Anspruch 1, **dadurch gekennzeichnet, dass** das Messerelement (10) und ein dieses teilweise umgebendes Federelement (16) in einer Ausnehmung (15) der Gehäusehälfte (1 a) einlegbar ist, wobei das an dieses Federelement (16) angedrückte Messerelement (10) damit quer zur Platten-Verschieberichtung federnd angeordnet ist.

3. Plattenschieber nach Anspruch 2, **dadurch gekennzeichnet, dass** die Schieberplatte (2) mit einem annähernd geradlinig ausgebildeten stirnseitigen Plattenrand versehen ist, indes das Messerelement (10) eine leicht abgerundete Schneidkante (11) aufweist, die mit der Schneidkante (12) der Schieberplatte (2) zusammenwirkt.

4. Plattenschieber nach Anspruch 3, **dadurch gekennzeichnet, dass** das Messerelement (10) bei den Ecken seiner Schneidkante (11) Anschrägungen (17) aufweist, welche schräg von der Schneidkante (12) der Schieberplatte (2) abgesetzt sind.

5. Plattenschieber nach Anspruch 3 oder 4, **dadurch gekennzeichnet, dass**
die Schneidkante (11) des Messerelements (10) mit einem kleineren Radius als der Radius der Schneidkante (12) der Schieberplatte (2) versehen ist, damit die Schieberplatte beim Schliessen zuerst mit ihren Ecken mit dem Messerelement in Kontakt kommt.

6. Plattenschieber nach einem der vorhergehenden Ansprüche 1 bis 5, **dadurch gekennzeichnet, dass**
der Schieber mit Spülbohrungen zum Spülen des zwischen Messerelement und Schiebergehäuse gebildeten Eckraumes versehen ist.

7. Plattenschieber nach einem der vorhergehenden Ansprüche 1 bis 6, **dadurch gekennzeichnet, dass**
das Schiebergehäuse (1a, 1b) eine Längsdichtung (18) aufweist, gegen welche die Schieberplatte (2) in der Schliessstellung angedrückt ist.

8. Plattenschieber nach einem der vorhergehenden Ansprüche 1 bis 7, **dadurch gekennzeichnet, dass**
mindestens ein das Messerelement (10) in Richtung gegen die Schieberplatte (2) hin andrückbares Justiermittel (25) vorgesehen ist, welches in der einen Gehäusehälfte (1a) quer zur Schieberausdehnung verstellbar angeordnet ist.

## Claims

1. Slide valve, preferable for biogas production equipment, comprising a slide housing (1a, 1b) having a passage opening (3) and a slider plate (2) therein movable between an open and a closed position with a knife edge (12) forming the frontal plate edge, **characterised in that**,
the slide housing (1 a, 1 b) is associated with at least one as a separate segment knife shaped blade element (10) with a cutting edge (11) in the bottom region of the passage opening (3) between two housing halves (1 a, 1 b), wherein said cutting edge (11) interacts shearing like with the knife edge (12) of the slider plate (2) with the movement of the slider plate (2) into the closed position.

2. Slide valve according to Claim 1, **characterised in that** the blade element (10) and a the latter partially surrounding spring element (16) is insertable in a recess (15) of the housing halve (1a), wherein the blade element (10) pressed to this spring element (16) is therewith resiliently arranged transversely to the movement direction of the plate.

3. Slide valve according to Claim 2, **characterised in that** the slider plate (2) is provided with an approximately rectilinear frontal plate edge, whereas the blade element (10) having a slightly rounded cutting edge (11), which is cooperating with the knife edge (12) of the slider plate (2).

4. Slide valve according to Claim 3, **characterised in that** the blade element (10) having slopes (17) at the corners of his cutting edge (11), which are offset obliquely from the knife edge (12) of the slider plate (2).

5. Slide valve according to Claim 3 or 4, **characterised in that** the cutting edge (11) of the blade element (10) is provided with a smaller radius than the radius of the knife edge (12) of the slider plate (2), so that with the closing the slider plate comes first into contact with its corners with the blade element.

6. Slide valve according to any of the preceding Claims 1 to 5, **characterised in that** slider is provided with purging holes for the purging of the formed corner space between the blade element and the slide housing.

7. The slide valve according to any of the preceding Claims 1 to 6, **characterised in that** the slide housing (1 a, 1 b) incorporates a longitudinal seal (18), against which the slider plate (2) is pressed on in the closed position.

8. The slide valve according to any of the preceding Claims 1 to 7, **characterised in that** at least one adjusting meaning (25) is incorporated, with which the blade element (10) can be pressed in the direction against the slider plate (2), and which is adjustable arranged in one housing half (1 a) transversely to the slide extension.

## Revendications

1. Robinet-vanne, de préférence pour des installations de production de biogaz, comprenant un corps (la, 1b) ayant une ouverture (3) de passage et un plateau (2) pouvant s'y déplacer entre une position d'ouverture et une position de fermeture et ayant une arête (12) coupante formant le bord du plateau du côté frontal, **caractérisé en ce que**
au corps (la, 1b) est associé dans la partie de bord inférieure de l'ouverture (3) de passage, entre deux moitiés (la, 1b) du corps, au moins un élément (10) de couteau, sous la forme d'un segment distinct de couteau, ayant une arête (11) coupante, cette arête (11) coupante coopérant, lorsque le plateau (2) vient en la position de fermeture, à la manière de ciseaux avec l'arête (12) coupante du plateau (2).

2. Robinet-vanne suivant la revendication 1, **caractérisé en ce que**
l'élément (10) de couteau et un élément (16) de ressort l'entourant en partie peuvent être mis dans un évidement (15) des moitiés (1a) du corps, l'élément (10) de couteau appliqué sur cet élément (16) de ressort étant ainsi monté élastiquement transversalement à la direction de déplacement du plateau.

3. Robinet-vanne suivant la revendication 2, **caractérisé en ce que**
le plateau (2) est pourvu d'un bord du côté frontal constitué d'une manière à peu près rectiligne, tandis que l'élément (10) de couteau a une arête (11) coupante légèrement arrondie, qui coopère avec l'arête (12) coupante du plateau (2).

4. Robinet-vanne suivant la revendication 3, **caractérisé en ce que**
l'élément (10) de couteau a, au coin de son arête (11) coupante, des biseaux (17) qui sont écartés en oblique de l'arête (12) coupante du plateau (2).

5. Robinet-vanne suivant la revendication 3 ou 4, **caractérisé en ce que**
l'arête (11) coupante de l'élément (10) de couteau a un rayon plus petit que le rayon de l'arête (12) coupante du plateau (2), afin que le plateau puisse à la fermeture venir d'abord en contact par ses coins avec l'élément de couteau.

6. Robinet-vanne suivant l'une des revendications précédentes 1 à 5, **caractérisé en ce que**
le robinet-vanne est pourvu de trous de lavage pour laver l'espace cunéiforme formé entre l'élément de couteau et le corps.

7. Robinet-vanne suivant l'une des revendications précédentes 1 à 6,
**caractérisé en ce que** le corps (la, 1b) a une garniture (18) d'étanchéité longitudinale sur laquelle le plateau (2) est repoussé en la position de fermeture.

8. Robinet-vanne suivant l'une des revendications précédentes 1 à 7,
**caractérisé en ce qu'**il est prévu au moins un moyen (5) de réglage, pouvant repousser l'élément (10) de couteau dans la direction du plateau (2) et monté réglable transversalement à l'étendue du robinet-vanne dans l'une des moitiés (1a) du corps.
